# EUROPEAN PATENT APPLICATION

(11) **EP 4 528 285 A1**
(43) Date of publication of application: **26.03.2025**
(21) Application number: 24201276.3
(22) Date of filing: 19.09.2024
(51) Int. Cl.: G01N 35/00

(54) **TEST TUBE SUPPLYING DEVICE INCLUDING TEST TUBE SUPPLY MODULE AND TEST TUBE SUPPLYING METHOD USING THE SAME**

(30) Priority: 19.09.2023 KR 20230124989
(71) Applicant: Energium Co., Ltd., Siheung-si, Gyeonggi-do 15115 (KR)
(72) Inventor: LEE, Kang Hee, 15115 Siheung-si (KR); BAE, Yong Tak, 15115 Siheung-si (KR); PARK, Sang Jun, 15115 Siheung-si (KR)
(74) Representative: Tiburzi, Andrea

(57) **Abstract**

A test tube supplying device according to an embodiment of the disclosure may include a controller, a module mountable portion electrically connected to the controller and having a plurality of slots, and a plurality of test tube supply modules each having an accommodating space for accommodating a test tube and detachably mounted in the slot. The plurality of test tube supply modules may each have test tube information determined according to the test tube accommodated in each test tube supply module, and the controller may be configured to recognize, through an electric signal, identification information of the slot in which the test tube supply module is mounted among the plurality of slots, and to identify test tube information for each slot, based on the identification information and the test tube information of the mounted test tube supply module.

## Description

### BACKGROUND

### Field

The disclosure relates to a test tube supplying device including a test tube supply module and a test tube supplying method using the same.

### Description of Related Art

Test tubes that contain samples (e.g., blood) required for various tests are used in medical institutions such as hospitals. In order to improve the efficiency of the test work, information on the sample contained in the test tube may be provided to the surface of the test tube. For example, the date of blood collection, the time of blood collection, and personal information of the test subject may be shown using a barcode, etc. on the surface of the test tube.

An automated test tube supplying device that attaches a label printed with text information or electronic information such as a barcode can be used to provide sample information to the surface of the test tube.

The test tube supplying device may include a test tube supply module for inserting a test tube into a label attaching device, the label attaching device for attaching a label to the test tube discharged by the test tube supply module, and a label printing device for supplying the label to the label attaching device. The test tube supply module having a plurality of test tubes loaded therein may discharge the test tubes through a discharge port to supply them to the label attaching device.

The test tube supplying device may include a certain number of test tube supply modules. By the way, if multiple test tubes of different types are mixed and accommodated in each test tube supply module, it may not be easy to print and attach labels corresponding to the test tubes discharged from the test tube supply module because work for classifying the test tubes is required.

Even if test tubes are accommodated in each test tube supply module according to their types, the number of spaces where the test tube supply modules can be mounted is limited, making it difficult to accommodate new types of test tubes.

### SUMMARY

A test tube supplying device according to an embodiment of the disclosure may include a controller, a module mountable portion electrically connected to the controller and having a plurality of slots, and a plurality of test tube supply modules each having an accommodating space for accommodating a test tube and detachably mounted in the slot. The plurality of test tube supply modules may each have test tube information determined according to the test tube accommodated in each test tube supply module, and the controller may be configured to recognize, through an electric signal, identification information of the slot in which the test tube supply module is mounted among the plurality of slots, and to identify test tube information for each slot, based on the identification information and the test tube information of the mounted test tube supply module.

A test tube supplying method using a test tube supplying device according to an embodiment of the disclosure may include receiving a test tube supply request, identifying a slot that accommodates a supply-requested test tube based on slot-specific test tube information of the test tube supplying device, and discharging the test tube from a test tube supply module mounted in the identified slot.

The test tube supplying device according to an embodiment of the disclosure can accommodate a predetermined type of test tube for each test tube supply module, so that a separate operation for classifying test tubes is unnecessary, and also label printing and attaching corresponding to the test tube discharged from the test tube supply module can be easily performed.

In addition, the test tube supplying device according to an embodiment of the disclosure can recognize the position where each test tube supply module is mounted and the information on the test tubes accommodated by the mounted test tube supply module, so that label printing and attaching corresponding to the test tube discharged from the test tube supply module can be easily performed.

In addition, the test tube supplying device according to an embodiment of the disclosure can detachably mount the test tube supply modules, so that a test tube supply module having new test tube information can be mounted without a need to expand a slot (e.g., a mounting slot) of the test tube supplying device.

In addition, the test tube supplying device according to an embodiment of the disclosure can adjust the rotation of the rotating member when a jamming phenomenon of the test tube discharged from the test tube supply module is detected, so that the discharge of the test tube may not be delayed.

In addition, the test tube supplying device according to an embodiment of the disclosure can easily identify the position and direction of the test tube placed in the test tube supply module by including the light emitter and the camera unit.

### BRIEF DESCRIPTION OF THE DRAWINGS

In the drawings, the same or similar reference numerals may be used to indicate the same or similar elements.
FIGS. 1 and 2 are perspective views showing a test tube supplying device according to an embodiment of the disclosure.
FIG. 3 is a block diagram showing a test tube supplying device according to an embodiment of the disclosure.
FIG. 4 is a flowchart showing a test tube information identifying method using a test tube supplying device according to an embodiment of the disclosure.
FIG. 5 is a flowchart showing a test tube supplying method using a test tube supplying device according to an embodiment of the disclosure.
FIGS. 6A, 6B and 6C are schematic views showing a discharge process of a test tube in a test tube supply module according to an embodiment of the disclosure.
FIG. 7 is a flowchart showing a test tube supplying method using a test tube supplying device according to an embodiment of the disclosure.
FIG. 8 is a flowchart showing a test tube supplying method using a test tube supplying device according to an embodiment of the disclosure.
FIG. 9 is a block diagram showing a test tube supplying device according to an embodiment of the disclosure.

### DETAILED DESCRIPTION

Embodiments of the disclosure and the terms used herein are not intended to limit the technical features of the disclosure to particular embodiments, but should be understood to encompass various modifications, equivalents, or alternatives of the embodiments.

In the drawings and description, similar reference numerals may be used to indicate similar or related elements. The singular form of a noun used to indicate a certain item means that one or more of the items may be included, unless the context clearly indicates otherwise.

The phrase "at least one of', when used with a list of items, means that different combinations of one or more of the listed items may be used. For example, "at least one of A, B, and C" includes any of the following combinations: A; B; C; A and B; A and C; B and C; and A, B and C. Additionally, the terms including ordinal expressions such as "first", "second", etc. are used for merely distinguishing one element from other elements and do not limit the corresponding elements in the sequence or importance of the elements.

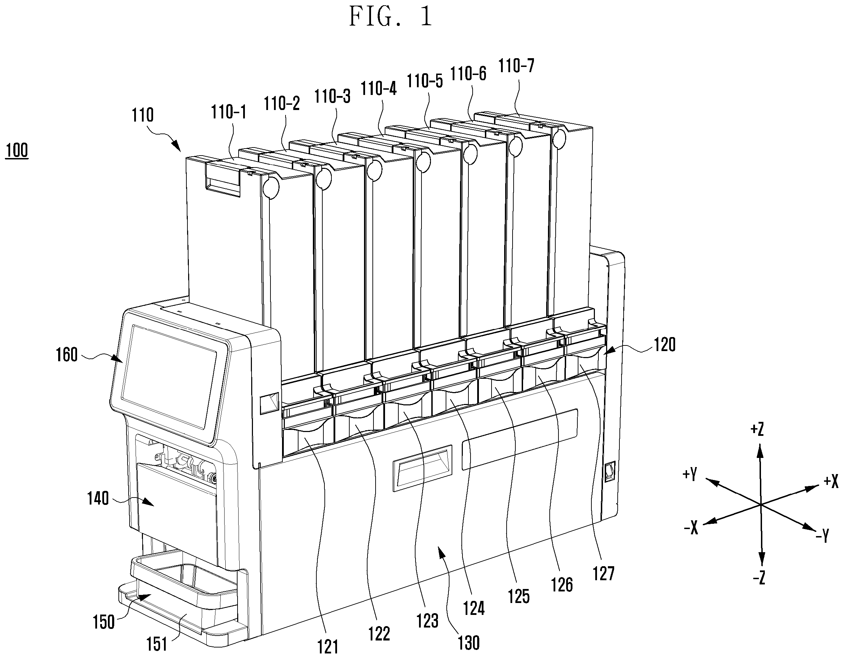

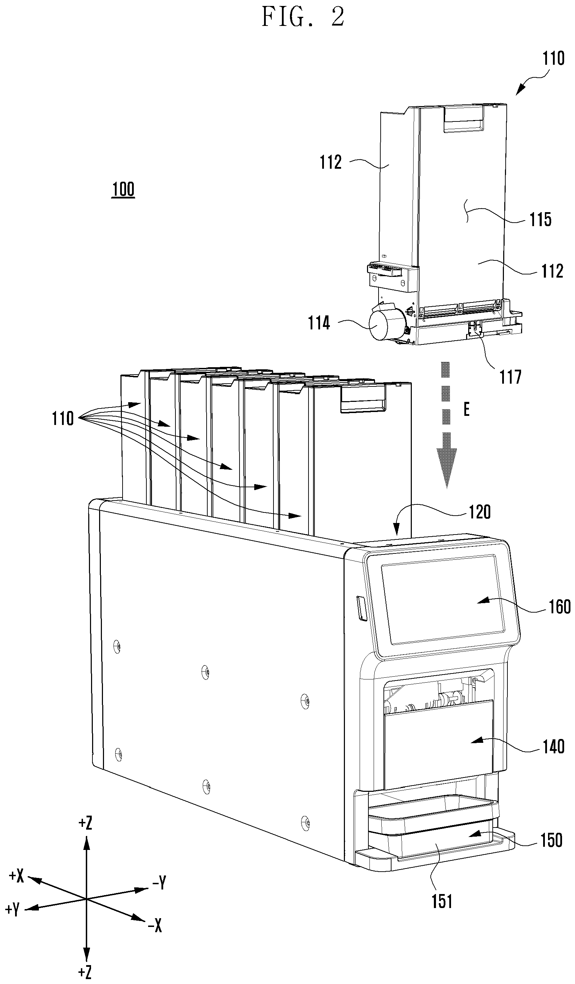

FIGS. 1 and 2 are perspective views showing a test tube supplying device 100 according to an embodiment of the disclosure.

FIG. 1 is a view showing a state in which a plurality of test tube supply modules 110 according to an embodiment are mounted on the test tube supplying device 100. FIG. 2 is a view showing a state in which the test tube supply module 110 according to an embodiment is mounted on the test tube supplying device 100.

In describing the test tube supplying device 100 according to an embodiment of the disclosure, the length direction of the test tube supplying device 100 may refer to the x-axis direction, and the width direction of the test tube supplying device 100 may refer to the y-axis direction. Also, the height direction of the test tube supplying device 100 may refer to the z-axis direction.

The test tube supplying device 100 according to an embodiment of the disclosure may include the test tube supply module 110, a module mountable portion 120, a label printing device 130, a labeling device 140, a tray mountable portion 150, and/or an auxiliary input/output device 160.

In an embodiment, the test tube supplying device 100 may be a device for supplying the test tube on which labeling has been completed.

In an embodiment, the test tube supply module 110 may be a module having therein an accommodating space 115 in which the test tube can be accommodated. The test tube supply module 110 may accommodate therein the test tube to be supplied to the labeling device 140. The test tube accommodated in the test tube supply module 110 may be a test tube containing a sample.

In an embodiment, the test tube supplying device 100 may include a plurality of test tube supply modules 110.

In an embodiment, the test tube supplying device 100 may include the module mountable portion 120 on which the plurality of test tube supply modules 110 can be mounted. The plurality of test tube supply modules 110 may be arranged along the length direction (e.g., the x-axis direction) of the test tube supplying device 100 on the module mountable portion 120.

In an embodiment, the module mountable portion 120 may have a plurality of slots (e.g., 121, 122). For example, the module mountable portion 120 may have a first slot 121, a second slot 122, a third slot 123, a fourth slot 124, a fifth slot 125, a sixth slot 126, and/or a seventh slot 127. The test tube supply module 110 may be disposed in each slot.

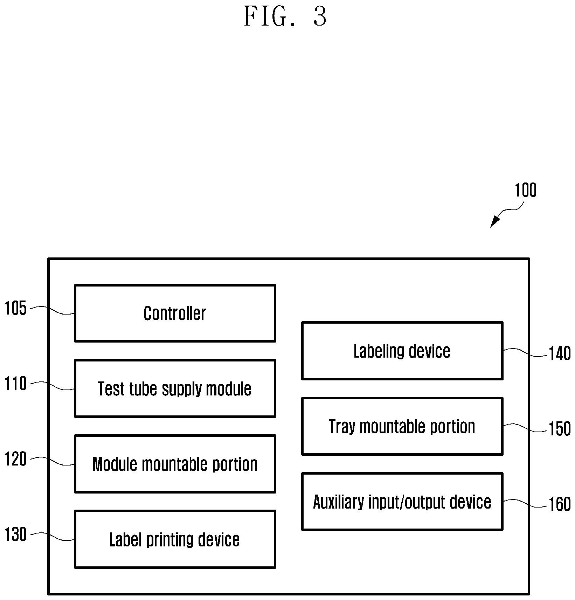

In an embodiment, each of the plurality of slots (e.g., 121, 122) may have slot-specific identification information (e.g., a serial number). A controller (105, see FIG. 3) may identify each slot (e.g., 121, 122).

In an embodiment, the label printing device 130 is provided under the test tube supply module 110 (e.g., in the negative z-axis direction from the test tube supply module 110) and is capable of printing patient information related to a sample contained in the test tube on a label attached to the test tube.

In an embodiment, the label printing device 130 can print patient information such as a patient ID, a test item, a test tube type, and a blood collection amount on a label supplied from a supply roller (not shown) on which labels are wound.

In an embodiment, the labeling device 140 is provided at one side of the label printing device 130 (e.g., in the negative x-axis direction from the label printing device 130) and is capable of attaching the label supplied through the label printing device 130 to the test tube supplied from the test tube supply module 110.

In an embodiment, the test tube discharged from the test tube supply module 110 may be placed for labeling in the labeling device 140. The label printed by the label printing device 130 may be transferred to the labeling device 140 with a release paper attached to the back of the label separated. The labeling device 140 can attach the label transferred from the label printing device 130 to the test tube supplied from the test tube supply module 110.

In an embodiment, the tray mountable portion 150 having a space for mounting a tray 151 for accommodating the test tube discharged through the labeling device 140 may be formed under the labeling device 140 (e.g., in the negative z-axis direction from the labeling device 140).

In an embodiment, the test tube supplying device 100 may include the auxiliary input/output device 160 positioned on one side of the test tube supply module 110 (e.g., in the negative x-axis direction from the test tube supply module 110). Using the auxiliary input/output device 160, a user of the test tube supplying device 100 may additionally input information required for label printing. Alternatively, using the auxiliary input/output device 160, a user of the test tube supplying device 100 may input or output patient information separately from the label attached to the test tube.

In an embodiment, the test tube supply module 110 may be detachably disposed on the test tube supplying device 100. For example, the test tube supply module 110 may be combined with or separated from the test tube supplying device 100.

In an embodiment, the test tube supply module 110 may include a memory (not shown). The test tube supply module 110 can store information on the test tube accommodated in the test tube supply module 110 in the memory (not shown).

In an embodiment, the test tube supply module 110 may be placed in the module mountable portion 120 of the test tube supplying device 100. For example, with reference to FIG. 2, the test tube supply module 110 may be mounted on the module mountable portion 120 along a mounting direction (E).

In an embodiment, each test tube supply module 110 may have support surfaces 112 extending in the height direction of the test tube supply module 110. In an embodiment, the accommodating space 115 may be a space surrounded by the support surfaces 112. In an embodiment, the height direction of the test tube supply module 110 may refer to the z-axis direction.

In an embodiment, the test tube inserted into the test tube supply module 110 may be supported by the support surfaces 112. A plurality of test tubes may be supported by the support surfaces 112 and placed in the accommodating space 115.

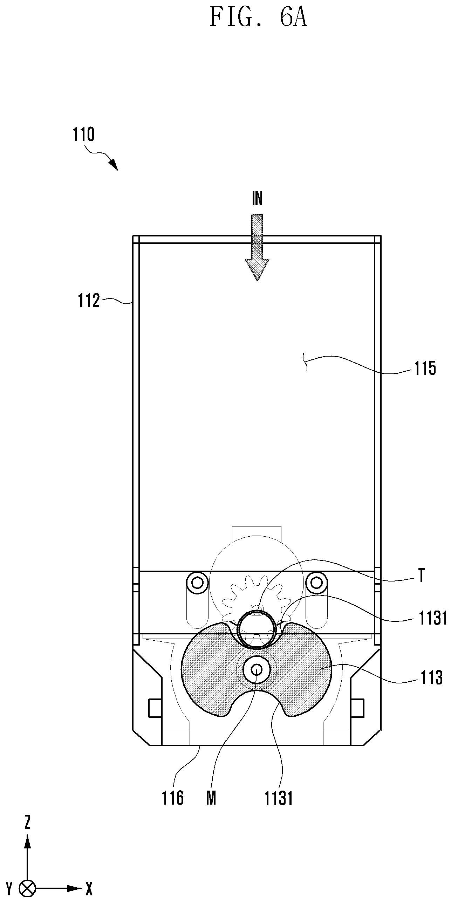

In an embodiment, the test tube supply module 110 may include a driving unit 114. The driving unit 114 may include a motor that generates a rotational force. The rotational force generated by the driving unit 114 may be transmitted to a rotating member (113, see FIG. 6A).

In an embodiment, the test tube supply module 110 may include a detection sensor 117. The detection sensor 117 is capable of detecting movement of the rotating member (113, see FIG. 6A) and/or the test tube (T, see FIG. 6A).

With reference to FIGS. 1 and 2, seven test tube supply modules 110 are shown as being mounted on the test tube supplying device 100. However, this is an example for illustration, and the number of test tube supply modules 110 mounted on the test tube supplying device 100 is not be limited thereto.

In an embodiment, the test tube supply modules 110 may include a first test tube supply module 110-1, a second test tube supply module 110-2, a third test tube supply module 110-3, a fourth test tube supply module 110-4, a fifth test tube supply module 110-5, a sixth test tube supply module 110-6, and/or a seventh test tube supply module 110-7.

In an embodiment, each of the plurality of test tube supply modules 110 may accommodate a predetermined type of test tube. For example, one test tube supply module 110 (e.g., the first test tube supply module 110-1) may accommodate a plurality of test tubes of substantially the same type.

In an embodiment, the types of test tubes accommodated in the respective test tube supply modules 110 may be different from each other. For example, a plurality of test tubes accommodated in the first test tube supply module 110-1 may be test tubes each containing a first sample. A plurality of test tubes accommodated in the second test tube supply module 110-2 may be test tubes each containing a second sample. The first sample and the second sample may be different types of samples.

FIG. 3 is a block diagram showing a test tube supplying device 100 according to an embodiment of the disclosure.

The test tube supplying device 100 according to an embodiment of the disclosure may include a controller 105, the test tube supply module 110, the module mountable portion 120, the label printing device 130, the labeling device 140, the tray mountable portion 150, and/or the auxiliary input/output device 160.

In an embodiment, the controller 105 may be electrically connected to the module mountable portion 120. For example, the controller 105 may be electrically connected to each of the slots (e.g., the first slot 121, the second slot 122) of the module mountable portion 120.

In an embodiment, the controller 105 is capable of controlling the operation of the test tube supplying device 100.

In an embodiment, under the control of the controller 105, the test tube supplying device 100 can recognize that the test tube supply module 110 is mounted on the test tube supplying device 100.

In an embodiment, the test tube supplying device 100 can recognize, under the control of the controller 105, identification information of the slot (e.g., 121, 122) in which the test tube supply module 110 is mounted.

In an embodiment, the test tube supplying device 100 can recognize, under the control of the controller 105, test tube information of the test tube supply module 110 mounted in the slot (e.g., 121, 122).

In an embodiment, the test tube supplying device 100 can identify test tube information for each slot, under the control of the controller 105, based on the identification information of the slot (e.g., 121, 122) where the test tube supply module 110 is mounted, and the test tube information of the mounted test tube supply module 110.

In an embodiment, the test tube supplying device 100 can print the label using the label printing device 130, under the control of the controller 105, based on the test tube information of the test tube supply module 110.

In an embodiment, the test tube supplying device 100 can attach the printed label to the test tube using the labeling device 140 under the control of the controller 105.

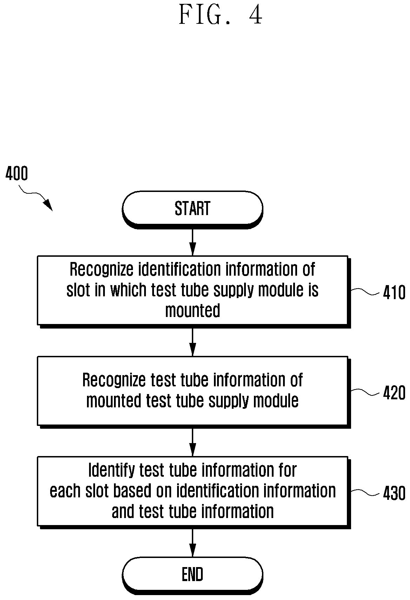

FIG. 4 is a flowchart showing a test tube information identifying method 400 using a test tube supplying device 100 according to an embodiment of the disclosure.

In an embodiment, the test tube information identifying method 400 may be performed in accordance with, for example, the flowchart illustrated in FIG. 4. The flowchart illustrated in FIG. 4 is merely according to an embodiment of the test tube information identifying method 400, so the order of operations may be changed or some operations may be performed simultaneously.

The test tube information identifying method 400 using the test tube supplying device 100 according to an embodiment of the disclosure may include an operation 410 of recognizing the identification information of the slot in which the test tube supply module 110 is mounted, an operation 420 of recognizing the test tube information of the mounted test tube supply module 110, and/or an operation 430 of identifying the test tube information for each slot based on the identification information of the slot and the test tube information of the mounted test tube supply module 110.

According to an embodiment, in the operation 410, the test tube supplying device 100 may recognize, under the control of the controller 105, the identification information of the slot in which the test tube supply module 110 is mounted. For example, the test tube supply module 110 may be mounted in one of the slots (e.g., 121, 122) of the module mountable portion 120. The test tube supplying device 100 may identify, through the identification information of the slot, where the test tube supply module 110 is mounted among the plurality of slots (e.g., the first slot 121, the second slot 122). For example, when the test tube supply module 110 identifies the identification information of the first slot 121, the test tube supplying device 100 may recognize the position where the test tube supply module 110 is placed as the first slot 121.

In an embodiment, the plurality of test tube supply modules 110 may each store test tube information determined for each test tube supply module 110. In an embodiment, the test tube information may refer to information on the test tube accommodated in the test tube supply module 110. The test tube information may include information on a sample contained in the test tube, test information related to the sample, and/or shape information of the test tube. If two test tube supply modules 110 have the same test tube information, the types of test tubes accommodated in the two test tube supply modules 110 (e.g., the types of samples contained in the test tubes) may be substantially the same. If two test tube supply modules 110 have different test tube information, the types of test tubes accommodated in the two test tube supply modules 110 (e.g., the types of samples contained in the test tubes) may be substantially different from each other.

According to an embodiment, in the operation 420, the test tube supplying device 100 may recognize, under the control of the controller 105, the test tube information of the test tube supply module 110 mounted on the test tube supplying device 100. When the plurality of test tube supply modules 110 are mounted on the module mountable portion 120, the test tube supplying device 100 can recognize the test tube information of each of the plurality of test tube supply modules 110.

According to an embodiment, in the operation 430, the test tube supplying device 100 may identify, under the control of the controller 105, the information on the test tube accommodated in the test tube supply module 110 for each slot in which the test tube supply module 110 is mounted, based on the identification information of the slot recognized in the operation 410 and the test tube information of the mounted test tube supply module 110 recognized in the operation 420.

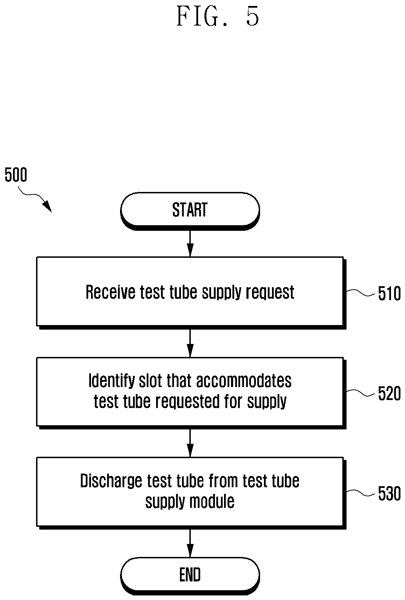

FIG. 5 is a flowchart showing a test tube supplying method 500 using a test tube supplying device 100 according to an embodiment of the disclosure.

In an embodiment, the test tube supplying method 500 may be performed in accordance with, for example, the flowchart illustrated in FIG. 5. The flowchart illustrated in FIG. 5 is merely according to an embodiment of the test tube supplying method 500, so the order of operations may be changed or some operations may be performed simultaneously.

The test tube supplying method 500 using the test tube supplying device 100 according to an embodiment of the disclosure may include an operation 510 of receiving a test tube supply request, an operation 520 of identifying a slot that accommodates a test tube requested for supply based on slot-specific test tube information, and/or an operation 530 of discharging the test tube from the test tube supply module 110 mounted in the identified slot.

According to an embodiment, in the operation 510, the test tube supplying device 100 may receive, under the control of the controller 105, a supply request for a specific test tube. The specific test tube may refer to a test tube having test tube information including predetermined information.

According to an embodiment, in the operation 520, the test tube supplying device 100 may identify, under the control of the controller 105, which slot among the slots (e.g., 121, 122) of the test tube supplying device 100 has the test tube supply module 110 in which the test tube requested for supply is accommodated.

In an embodiment, before or while performing the operation 520 of identifying the slot that accommodates the test tube requested for supply, the test tube supplying device 100 may perform the test tube information identifying method 400 illustrated in FIG. 4 to identify the information on the test tube accommodated in the test tube supply module 110 for each slot. For example, before performing the operation 520, the test tube supplying device 100 may perform the test tube information identifying method 400 shown in FIG. 4 and thereby identify the information on the test tube accommodated in the test tube supply module 110 for each slot in which the test tube supply module 110 is mounted. In the operation 520, the test tube supplying device 100 may identify the slot in which the test tube requested for supply is located, based on the slot-specific test tube information identified through the test tube information identifying method 400 illustrated in FIG. 4.

According to an embodiment, in the operation 530, the test tube supplying device 100 may discharge, under the control of the controller 105, the supply-requested test tube from the corresponding test tube supply module 110. For example, the test tube supplying device 100 may identify, in the operation 520, the slot in which the supply-requested test tube is located, and discharge, in the operation 530, the test tube from the test tube supply module 110 mounted in the identified slot.

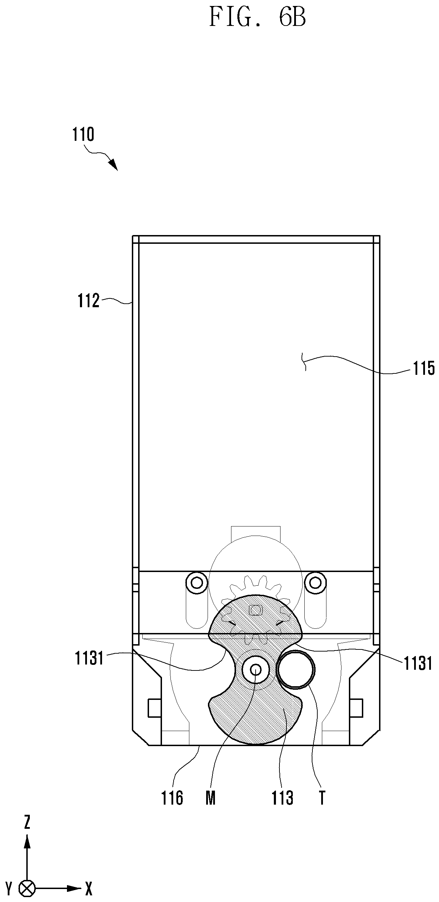

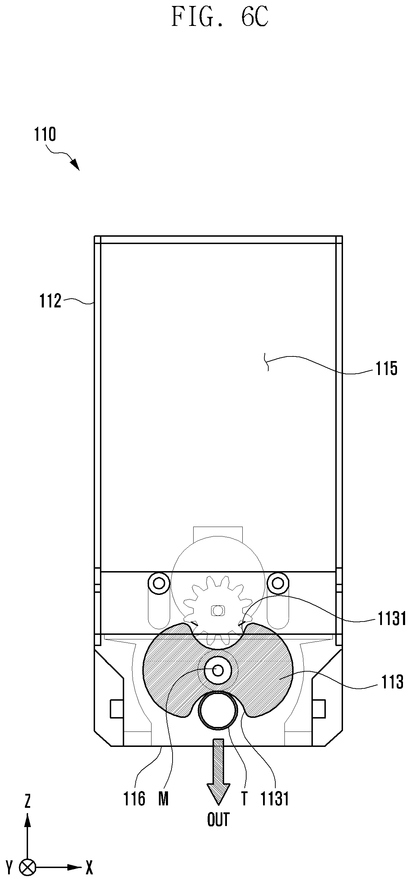

FIGS. 6A, 6B and 6C are schematic views showing a discharge process of a test tube T in a test tube supply module 110 according to an embodiment of the disclosure.

FIG. 6A is a view showing a state in which the test tube T is placed in the test tube supply module 110. FIG. 6B is a view showing a state in which a rotating member 113 on which the test tube T is placed is rotated 90 degrees around a center of rotation M with respect to the state shown in FIG. 6A. FIG. 6C is a view showing a state in which the rotating member 113 is rotated 180 degrees around the center of rotation M with respect to the state shown in FIG. 6A.

FIGS. 6A, 6B, and 6C are cross-sectional views of the test tube supply module 110 of FIG. 2 cut in a direction perpendicular to the Y-axis.

The test tube supply module 110 according to an embodiment of the disclosure may include a support surface 112, a rotating member 113, a driving unit (114, see FIG. 1), an accommodating space 115, a discharge opening 116, and/or a detection sensor (117, see FIG. 1).

With reference to FIG. 6A, the test tube T may be inserted into the accommodating space 115 of the test tube supply module 110. The test tube T inserted into the accommodating space 115 of the test tube supply module 110 may be seated on the rotating member 113.

In an embodiment, the rotating member 113 may have a test tube seating portion 1131 on which the test tube T is seated. The test tube seating portion 1131 may be formed in a concave shape toward the center of rotation M. The test tube T may be seated on the test tube seating portion 1131.

In an embodiment, the driving unit (114, see FIG. 1) may include a motor that generates a rotational force. The rotational force generated by the driving unit (114, see FIG. 1) may be transmitted to the rotating member 113.

With reference to FIGS. 6A, 6B, and 6C, the rotating member 113 may be rotated around the center of rotation M. The rotating member 113 may be rotated by receiving the rotational force generated by the driving unit (114, see FIG. 1).

With reference to FIGS. 6A, 6B, and 6C, the test tube T may be positioned on the test tube seating portion 1131 of the rotating member 113 and then moved according to the rotation of the rotating member 113. For example, as shown in FIG. 6B, when the rotating member 113 is rotated 90 degrees around the center of rotation M compared to the state of FIG. 6A, the test tube T may also be placed at a position rotated 90 degrees around the center of rotation M. In addition, as shown in FIG. 6C, when the rotating member 113 is rotated 180 degrees around the center of rotation M compared to the state of FIG. 6A, the test tube T may also be placed at a position rotated 180 degrees around the center of rotation M.

In FIGS. 6A, 6B, and 6C, the rotating member 113 is illustrated as being rotated clockwise around the center of rotation M, but this is exemplary, and the direction of rotation of the rotating member 113 may not be limited thereto. Alternatively, the rotating member 113 may be rotated counterclockwise around the center of rotation M.

With reference to FIGS. 6A, 6B, and 6C, in the state of FIG. 6A, the test tube T may be supported by the rotating member 113. For example, the test tube T may be seated on the test tube seating portion 1131 of the rotating member 113 and supported in the height direction (e.g., the z-axis direction) of the test tube supply module 110 so as not to move out of the test tube supply module 110. In the state of FIG. 6C, the test tube T may be discharged from the test tube supply module 110. In the state of FIG. 6C, the test tube T is not supported by the rotating member 113, so it may be discharged (OUT) to the outside of the test tube supply module 110 through the discharge opening 116.

In an embodiment, a first state of the test tube supply module 110 may refer to the state shown in FIG. 6A. For example, the first state of the test tube supply module 110 may refer to a state in which the test tube T inserted (IN) into the test tube supply module 110 is placed on the test tube seating portion 1131 of the rotating member 113 and is positioned in the positive z-axis direction from the center of rotation M.

In an embodiment, a second state of the test tube supply module 110 may refer to the state shown in FIG. 6C. For example, the second state of the test tube supply module 110 may refer to a state in which the test tube T inserted into the test tube supply module 110 is positioned in the negative z-axis direction from the center of rotation M and is being discharged to the outside of the test tube supply module 110.

In an embodiment, when the rotating member 113 and the test tube T placed on the rotating member 113 are rotated around the center of rotation M, the detection sensor (117, see FIG. 1) may detect the movement of the rotating member 113 and/or the test tube T. The detection sensor (117, see FIG. 1) may detect that the test tube supply module 110 is changing from the first state of FIG. 6A to the second state of FIG. 6C.

In an embodiment, a normal operating state of the rotating member 113 may refer to a state in which the rotating member 113 rotates within a predetermined reference speed range and the rotation of the rotating member 113 is not stopped. If the rotating member 113 is not in the normal operating state, the test tube T inserted into the test tube supply module 110 may be delayed from being discharged to the outside of the test tube supply module 110. For example, if the plurality of test tubes T are arranged around the rotating member 113 and impede the rotation of the rotating member 113, causing the rotation of the rotating member 113 to be stopped, or if the rotation of the rotating member 113 is performed at a speed lower than a predetermined reference speed, the rotating member 113 may not be in the normal operating state.

In the test tube supply module 110 according to an embodiment, a test tube jamming phenomenon may refer to a phenomenon in which the discharge of the test tube T is delayed when it gets caught in at least a part of the inside of the test tube supply module 110 during the process of being discharged to the outside of the test tube supply module 110. If the test tube jamming phenomenon occurs in the test tube supply module 110, the rotating member 113 may not be in the normal operating state.

In an embodiment, the test tube supplying device 100 may determine whether the rotating member 113 is in the normal operating state by using the detection sensor 117 of the test tube supply module 110. For example, by detecting the movement of the rotating member 113 and the test tube T through the detection sensor 117, the test tube supplying device 100 may determine whether the rotating member 113 is in the normal operating state.

In an embodiment, the test tube supplying device 100 may determine whether the rotating member 113 is in the normal operating state by using a magnetic encoder (not shown) and a magnet member (not shown). For example, the test tube supply module 110 may include the magnetic encoder and the magnet member. The magnet member may rotate together with the rotation of the rotating member 113. If the rotation of the rotating member 113 that is rotating in one direction is stopped, the rotation of the magnet member may also be stopped. The magnetic encoder of the test tube supply module 110 may detect changes in the magnetic field due to the stop of rotation of the magnet member to identify that the rotating member 113 is not in the normal operating state.

In an embodiment, the test tube supplying device 100 may measure the current value of the driving unit 114 to determine whether the rotating member 113 is in the normal operating state, and may adjust the rotation of the rotating member 113. For example, if the rotation of the rotating member 113 is hindered due to an external factor, the driving unit 114 may require additional rotational force, and the current value of the driving unit 114 may increase above a predetermined reference. If the current value of the driving unit 114 increases above the predetermined reference, the test tube supplying device 100 may determine that the rotating member 113 is not in the normal operating state.

In an embodiment, the test tube supplying device 100 may measure the rotation speed of the rotating member 113 to determine whether the rotating member 113 is in the normal operating state. For example, if the rotation speed of the rotating member 113 decreases below a predetermined reference, the test tube supplying device 100 may determine that the rotating member 113 is not in the normal operating state.

In an embodiment, upon determining that the rotating member 113 is not in the normal operating state, the test tube supplying device 100 may rotate the rotating member 113 in a direction opposite to the existing rotation direction under the control of the controller 105. When the rotating member 113 is rotated again in the opposite direction, delay in discharge of the test tube T from the test tube supply module 110 may be prevented or reduced.

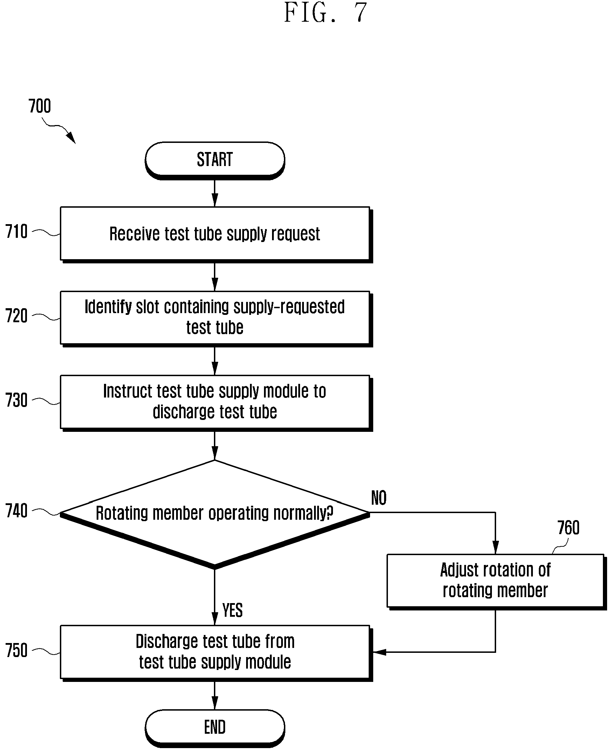

FIG. 7 is a flowchart showing a test tube supplying method 700 using a test tube supplying device 100 according to an embodiment of the disclosure.

In an embodiment, the test tube supplying method 700 may be performed in accordance with, for example, the flowchart illustrated in FIG. 7. The flowchart illustrated in FIG. 7 is merely according to an embodiment of the test tube supplying method 700, so the order of operations may be changed or some operations may be performed simultaneously.

The test tube supplying method 700 using the test tube supplying device 100 according to an embodiment of the disclosure may include an operation 710 of receiving a test tube supply request, an operation 720 of identifying a slot containing a supply-requested test tube based on slot-specific test tube information, an operation 730 of instructing a test tube supply module 110 mounted in the identified slot to discharge the test tube, an operation 740 of determining whether a rotating member is in a normal operating state, an operation 750 of discharging the test tube from the test tube supply module 110, and/or an operation 760 of adjusting the rotation of the rotating member 113.

Among the operations of the test tube supplying method 700 in FIG. 7, the operation 710 of receiving a test tube supply request and the operation 720 of identifying a slot containing the supply-requested test tube based on slot-specific test tube information may be substantially the same operations as the operation 510 of receiving a test tube supply request and the operation 520 of identifying a slot containing the supply-requested test tube based on slot-specific test tube information in FIG. 5, respectively. In describing the operations of the test tube supplying method 700 in FIG. 7, the description of operations that are substantially the same as the operations of the test tube supplying method 500 in FIG. 5 may be omitted.

In an embodiment, before or while performing the operation 720 of identifying the slot that accommodates the test tube requested for supply, the test tube supplying device 100 may perform the test tube information identifying method 400 illustrated in FIG. 4 to identify the information on the test tube accommodated in the test tube supply module 110 for each slot. For example, before performing the operation 720, the test tube supplying device 100 may perform the test tube information identifying method 400 shown in FIG. 4 and thereby identify the information on the test tube accommodated in the test tube supply module 110 for each slot in which the test tube supply module 110 is mounted. In the operation 720, the test tube supplying device 100 may identify the slot in which the test tube requested for supply is located, based on the slot-specific test tube information identified through the test tube information identifying method 400 illustrated in FIG. 4.

According to an embodiment, in the operation 730, the test tube supplying device 100 may instruct, under the control of the controller 105, the test tube supply module 110 accommodating the supply-requested test tube to discharge the accommodated test tube. For example, the test tube supplying device 100 may identify, in the operation 720, the slot in which the supply-requested test tube is located, and transmit an instruction to the test tube supply module 110 mounted in the identified slot to discharge the accommodated test tube.

According to an embodiment, in the operation 740, the test tube supplying device 100 may determine, under the control of the controller 105, whether the rotating member 113 of the test tube supply module 110 is in the normal operating state. For example, the test tube supplying device 100 may determine, under the control of the controller 105, whether the rotating member 113 is rotating normally without being disturbed by other components. In order to determine whether the rotating member 113 is in the normal operating state, the test tube supplying device 100 may use the detection sensor 117, a combination of the magnetic encoder and the magnet member, a measured current value of the driving unit 114, and/or a measured rotational speed of the rotating member 113.

According to an embodiment, in the operation 750, the test tube supplying device 100 may discharge, under the control of the controller 105, the test tube accommodated in the test tube supply module 110 to the outside of the test tube supply module 110. For example, in the operation 750, the rotating member 113 of the test tube supply module 110 may rotate in one direction (e.g., clockwise or counterclockwise) to discharge the test tube accommodated inside the test tube supply module 110 to the outside of the test tube supply module 110.

In an embodiment, the operation 750 of discharging the test tube may be performed simultaneously with the operation 740 or may be performed sequentially. For example, if it is determined in the operation 740 that the rotating member 113 is in the normal operating state, the rotating member 113 may be rotated in one direction and thus the test tube may be discharged from the test tube supply module 110.

According to an embodiment, in the operation 760 of adjusting the rotation of the rotating member 113, the test tube supplying device 100 may rotate, under the control of the controller 105, the rotating member 113 in the opposite direction. For example, if it is determined in the operation 740 that the rotating member 113 is not in the normal operating state, the test tube supplying device 100 may rotate, under the control of the controller 105, the rotating member 113 in the opposite direction of the existing rotational direction.

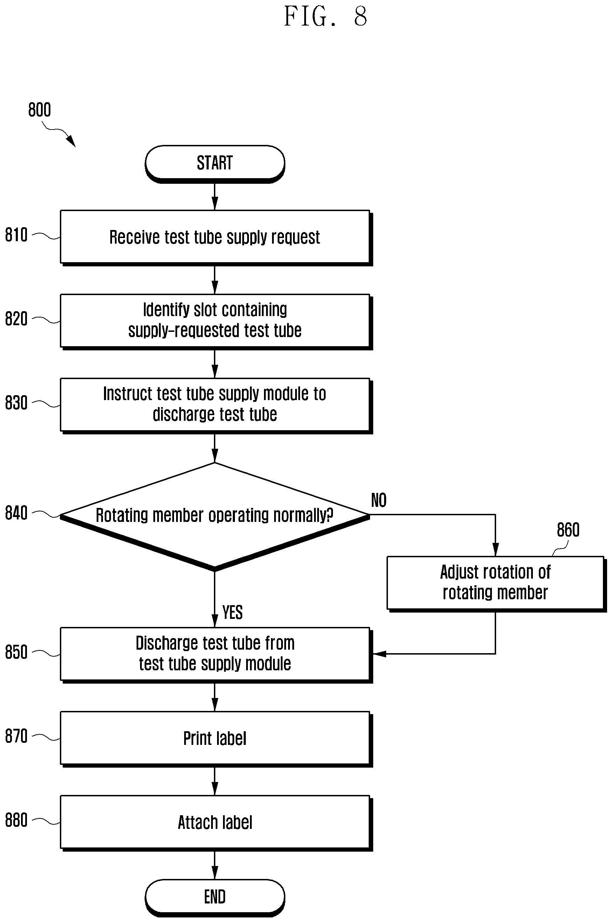

FIG. 8 is a flowchart showing a test tube supplying method 800 using a test tube supplying device 100 according to an embodiment of the disclosure.

In an embodiment, the test tube supplying method 800 may be performed in accordance with, for example, the flowchart illustrated in FIG. 8. The flowchart illustrated in FIG. 8 is merely according to an embodiment of the test tube supplying method 800, so the order of operations may be changed or some operations may be performed simultaneously.

The test tube supplying method 800 using the test tube supplying device 100 according to an embodiment of the disclosure may include an operation 810 of receiving a test tube supply request, an operation 820 of identifying a slot containing a supply-requested test tube based on slot-specific test tube information, an operation 830 of instructing a test tube supply module 110 mounted in the identified slot to discharge the test tube, an operation 840 of determining whether a rotating member is in a normal operating state, an operation 850 of discharging the test tube from the test tube supply module 110, an operation 860 of adjusting the rotation of the rotating member 113, an operation 870 of printing a label, and/or an operation 880 of attaching the printed label to the test tube.

Among the operations of the test tube supplying method 800 shown in FIG. 8, the operation 810 of receiving a test tube supply request, the operation 820 of identifying a slot containing a supply-requested test tube based on slot-specific test tube information, the operation 830 of instructing a test tube supply module 110 mounted in the identified slot to discharge the test tube, the operation 840 of determining whether a rotating member is in a normal operating state, the operation 850 of discharging the test tube from the test tube supply module 110, and the operation 860 of adjusting the rotation of the rotating member 113 may be substantially the same operations as the operation 710 of receiving a test tube supply request, the operation 720 of identifying a slot containing a supply-requested test tube based on slot-specific test tube information, the operation 730 of instructing a test tube supply module 110 mounted in the identified slot to discharge the test tube, the operation 740 of determining whether a rotating member is in a normal operating state, the operation 750 of discharging the test tube from the test tube supply module 110, and the operation 760 of adjusting the rotation of the rotating member 113, shown in FIG. 7, respectively. In describing the operations of the test tube supplying method 800 in FIG. 8, the description of operations that are substantially the same as the operations of the test tube supplying method 700 in FIG. 7 may be omitted.

According to an embodiment, in the operation 870, the test tube supplying device 100 may print, under the control of the controller 105, a label based on information of the test tube discharged from the test tube supply module 110. In an embodiment, the information of the test tube discharged from the test tube supply module 110 may correspond to predetermined label printing information. The label printing device 130 of the test tube supplying device 100 may print, under the control of the controller 105, a label indicating label printing information corresponding to the information of the test tube discharged from the test tube supply module 110.

According to an embodiment, in the operation 880, the test tube supplying device 100 may attach, under the control of the controller 105, the label printed in the label printing operation 870 to the test tube. The labeling device 140 of the test tube supplying device 100 may attach the label transferred from the label printing device 130 to the test tube discharged from the test tube supply module 110.

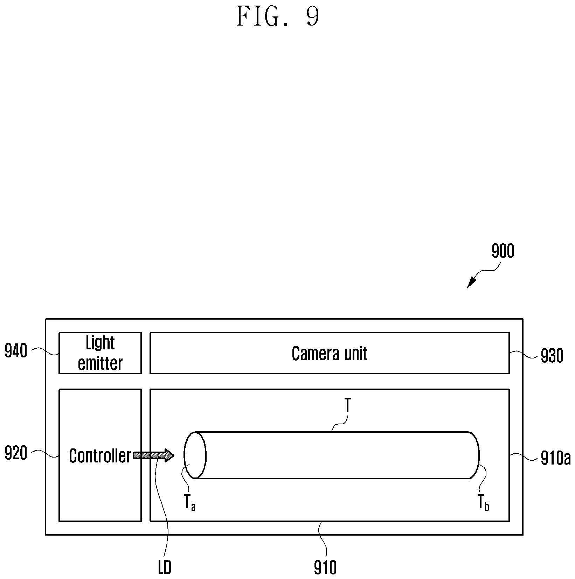

FIG. 9 is a block diagram showing a test tube supplying device 900 according to an embodiment of the disclosure.

The test tube supplying device 900 of FIG. 9 may refer to the test tube supplying device 100 of FIG. 1, or may include at least some of the components of the test tube supplying device 100 of FIG. 1.

The test tube supplying device 900 according to an embodiment of the disclosure may include a supplier 910, a light emitter 920, a camera 930, and/or a controller 940.

In an embodiment, the supplier 910 may refer to the test tube supply module 110 of FIG. 1, or may include at least some of the components of the test tube supply module 110 of FIG. 1.

In an embodiment, a test tube T may be placed in the supplier 910. The test tube T may be discharged to the outside of the supplier 910 after being placed in the supplier 910.

In an embodiment, the light emitter 920 may irradiate light toward the test tube T placed in the supplier 930.

In an embodiment, the light emitter 920 may include a laser diode. The light emitter 920 including the laser diode may irradiate light in one direction. For example, as shown in FIG. 9, the light emitter 920 may irradiate light toward the test tube T in a light-irradiating direction LD.

In an embodiment, the camera unit 930 may include a camera. In an embodiment, the camera unit 930 may photograph light irradiated from the light emitter 920 and/or light scattered by the test tube T using the camera.

In FIG. 9, the supplier 910, the light emitter 920, and the camera unit 930 are illustrated as separate individual components, but this may be exemplary. According to another embodiment, the supplier 910 may include the light emitter 920 and the camera unit 930. For example, the light emitter 920 and the camera unit 930 may be equipped in the supplier 910.

In an embodiment, the controller 940 may refer to the controller 105 of FIG. 3, or may include at least some of the components of the controller 105 of FIG. 3.

In an embodiment, the controller 940 may control the light emitter 920 and the camera unit 930. The light emitter 920 may irradiate light in one direction under the control of the controller 940. The camera unit 930 may photograph light irradiated from the light emitter 920 and/or light scattered by the test tube T under the control of the controller 940.

In an embodiment, the controller 940 may control the camera unit 930 to photograph only light scattered by the test tube T. For example, the controller 940 may control the camera unit 930 to photograph only light scattered by the test tube T without photographing light scattered by an end 910a of the supplier 910.

In an embodiment, an end of the test tube T that is placed in the supplier 910 may be open or closed. For example, the end of the test tube T may be configured in an open shape or a closed shape. In an embodiment, the test tube T may have an opening located at the end and closed with a separate stopper (not shown). In an embodiment, the test tube may have a transparent material.

As shown in FIG. 9, the test tube T according to an embodiment may have a first end Ta and/or a second end Tb. The first end Ta may be an open end of the test tube T, and the second end Tb may be a closed end of the test tube T. For example, the first end Ta may refer to an end of the test tube T, which has an open shape and its opening is not closed with a separate stopper (not shown).

In an embodiment, the test tube supplying device 900 may irradiate, under the control of the controller 940, light toward the test tube T in the light-irradiating direction LD using the light emitter 920. The light irradiated by the light emitter 920 may be scattered by the test tube T. For example, the light irradiated by the light emitter 920 may be scattered at the first end Ta and/or the second end Tb of the test tube T.

In an embodiment, the test tube supplying device 900 may photograph the light scattered by the test tube T using the camera unit 930 under the control of the controller 940. For example, the test tube supplying device 900 may photograph the light scattered from the first end Ta and/or the second end Tb of the test tube T using the camera unit 930 under the control of the controller 940. The test tube supplying device 900 may identify a color generated when the light is scattered, using the camera unit 930 under the control of the controller 940.

The degree of light scattering may be formed differently depending on the shape of the end of the test tube T. For example, the degree of light scattering may be formed differently in the case of the open end of the test tube T such as the first end Ta and in the case of the closed end such as the second end Tb. The degree of light scattering may be relatively higher at the closed end (e.g., the second end Tb) than at the open end (e.g., the first end Ta). Since the closed end scatters light relatively highly than the open end, the color generated during scattering may appear different from that of the open end.

In an embodiment, the test tube supplying device 900 may identify the position of the closed end (e.g., the second end Tb) and the position of the open end (e.g., the first end Ta) of the test tube T, based on the colors generated during light scattering, identified through the camera unit 930 under the control of the controller 940.

In an embodiment, the test tube supplying device 900 may identify the position and direction of the test tube T placed in the supplier 910 under the control of the controller 940. For example, based on the position of the closed end (e.g., the second end Tb) of the test tube T, the test tube supplying device 900 may identify the position and direction of the test tube T placed in the supplier 910 under the control of the controller 940.

Since the test tube supplying device 900 according to an embodiment of the disclosure includes the light emitter 920 and the camera unit 930, it can be easy to identify the position and direction of the test tube T placed in the supplier 910 (e.g., the test tube supply module 110 of FIG. 1).

A test tube supplying device 100 according to an embodiment of the disclosure may include a controller 105, a module mountable portion 120 electrically connected to the controller 105 and having a plurality of slots (e.g., 121), and a plurality of test tube supply modules 110 each having an accommodating space 115 for accommodating a test tube T and detachably mounted in the slot. The plurality of test tube supply modules 110 may each have test tube information determined according to the test tube T accommodated in each test tube supply module 110. The controller 105 may be configured to recognize, through an electric signal, identification information of the slot in which the test tube supply module 110 is mounted among the plurality of slots, and to identify test tube information for each slot, based on the identification information and the test tube information of the mounted test tube supply module 110.

In an embodiment, the test tube supply module 110 may have support surfaces 112 extending in a height direction of the test tube supply module 100, and the accommodating space 115 may be surrounded by the support surfaces 112.

In an embodiment, the plurality of test tube supply modules 110 may be arranged along a length direction of the test tube supplying device 100.

In an embodiment, the controller 105 may control a supply-requested test tube to be discharged from the test tube supply module 110 based on the identified test tube information for each slot.

In an embodiment, the controller 105 may control a label to be printed based on the test tube information of the test tube supply module 110.

In an embodiment, the controller 105 may control the label to be attached to the test tube discharged from the test tube supply module 110.

In an embodiment, each of the plurality of test tube supply modules 110 may include a rotating member 113 on which the test tube is placed, the rotating member 113 being rotated in one direction to discharge the placed test tube from the test tube supply module 110. Upon determining that the rotating member 113 is not in a normal operating state, the controller 105 may control the rotating member 113 to be rotated in other direction opposite to the one direction.

In an embodiment, the test tube supplying device 100 or 900 may further include a light emitter 920 for irradiating light onto the test tube T accommodated in the test tube supply module 110, and a camera unit 930 for photographing light scattered from the test tube T.

In an embodiment, the light emitter 920 may include a laser diode, and the controller 940 may control the laser diode to irradiate light in one direction toward the test tube T.

In an embodiment, the controller 940 may identify a color generated by the light scattered from the test tube T, and control to identify a position and direction of the placed test tube T based on the identified color.

A test tube supplying method 500 using a test tube supplying device according to an embodiment of the disclosure may include an operation 510 of receiving a test tube supply request, an operation 520 of identifying a slot that accommodates a supply-requested test tube based on slot-specific test tube information of the test tube supplying device, and an operation 530 of discharging the test tube from a test tube supply module mounted in the identified slot.

In an embodiment, the slot-specific test tube information of the test tube supplying device may be identified through a test tube information identifying method 400. The test tube information identifying method 400 may include an operation 410 of recognizing identification information of the slot in which the test tube supply module is mounted, an operation 420 of recognizing test tube information of the mounted test tube supply module, and an operation 430 of identifying the slot-specific test tube information based on the recognized identification information and the recognized test tube information.

In an embodiment, the test tube supplying method 700 may further include, after an operation 720 of identifying the slot that accommodates the supply-requested test tube based on the slot-specific test tube information of the test tube supplying device, an operation 730 of instructing the test tube supply module mounted in the identified slot to discharge the test tube, an operation 740 of determining whether a rotating member is in a normal operating state, and an operation 750 of adjusting a rotation of the rotating member.

In an embodiment, the test tube supplying method 800 may further include, after an operation 850 of discharging the test tube from the test tube supply module mounted in the identified slot, an operation 870 of printing a label, and an operation 880 of attaching the printed label to the test tube discharged from the test tube supply module.

While the disclosure has been particularly shown and described with reference to an exemplary embodiment thereof, it will be understood by those skilled in the art that various changes in form and details may be made therein without departing from the scope of the disclosure as defined by the appended claims.

## Claims

1. A test tube supplying device comprising:
a controller;
a module seated portion electrically connected to the controller and having a plurality of slots; and
a plurality of test tube supply modules each having an accommodating space for accommodating a test tube and detachably seated in the slot,
wherein the plurality of test tube supply modules each have test tube information determined according to the test tube accommodated in each test tube supply module, and
wherein the controller is configured to:
recognize, through an electric signal, identification information of the slot in which the test tube supply module is seated among the plurality of slots, and
identify test tube information for each slot, based on the identification information and the test tube information of the seated test tube supply module.

2. The test tube supplying device of claim 1, wherein the test tube supply module has support surfaces extending in a height direction of the test tube supply module, and
wherein the accommodating space is surrounded by the support surfaces.

3. The test tube supplying device of claim 1, wherein the plurality of test tube supply modules are arranged along a length direction of the test tube supplying device.

4. The test tube supplying device of claim 1, wherein the controller controls a supply-requested test tube to be discharged from the test tube supply module based on the identified test tube information for each slot.

5. The test tube supplying device of claim 4, wherein the controller controls a label to be printed based on the test tube information of the test tube supply module.

6. The test tube supplying device of claim 5, wherein the controller controls the label to be attached to the test tube discharged from the test tube supply module.

7. The test tube supplying device of claim 1, wherein each of the plurality of test tube supply modules includes a rotating member on which the test tube is placed, the rotating member being rotated in one direction to discharge the placed test tube from the test tube supply module, and
wherein upon determining that the rotating member is not in a normal operating state, the controller controls the rotating member to be rotated in other direction opposite to the one direction.

8. The test tube supplying device of claim 1, further comprising:
a light emitter for irradiating light onto the test tube accommodated in the test tube supply module; and
a camera unit for photographing light scattered from the test tube.

9. The test tube supplying device of claim 8, wherein the light emitter includes a laser diode, and
wherein the controller controls the laser diode to irradiate light in one direction toward the test tube.

10. The test tube supplying device of claim 9, wherein the controller identifies a color generated by the light scattered from the test tube, and controls to identify a position and direction of the placed test tube based on the identified color.

11. A test tube supplying method using a test tube supplying device, the method comprising:
receiving a test tube supply request;
identifying a slot that accommodates a supply-requested test tube based on slot-specific test tube information of the test tube supplying device; and
discharging the test tube from a test tube supply module mounted in the identified slot.

12. The test tube supplying method of claim 11, wherein the slot-specific test tube information of the test tube supplying device is identified through a test tube information identifying method, the test tube information identifying method including:
recognizing identification information of the slot in which the test tube supply module is mounted;
recognizing test tube information of the mounted test tube supply module; and
identifying the slot-specific test tube information based on the recognized identification information and the recognized test tube information.

13. The test tube supplying method of claim 11, further comprising:
after identifying the slot that accommodates the supply-requested test tube based on the slot-specific test tube information of the test tube supplying device,
instructing the test tube supply module mounted in the identified slot to discharge the test tube;
determining whether a rotating member is in a normal operating state; and
adjusting a rotation of the rotating member.

14. The test tube supplying method of claim 13, further comprising:
after discharging the test tube from the test tube supply module mounted in the identified slot,
printing a label; and
attaching the printed label to the test tube discharged from the test tube supply module.
